# EUROPEAN PATENT SPECIFICATION

(11) **EP 2 410 812 B1**
(45) Date of publication and mention of the grant of the patent: **05.06.2013**
(21) Application number: 10290416.6
(22) Date of filing: 22.07.2010
(51) Int. Cl.: H04W 84/04

(54) **Method for operating a relay node of a mobile communication network and relay node of a mobile communication network**
Verfahren zum Betrieb eines Relaisknotens eines mobilen Kommunikationsnetzwerks und Relaisknoten eines mobilen Kommunikationsnetzwerks
Procédé de fonctionnement d'un nýud de relais d'un réseau de communication mobile et nýud de relais d'un réseau de communication mobile

(43) Date of publication of application: 25.01.2012
(73) Proprietor: Alcatel Lucent, 75007 Paris (FR)
(72) Inventor: Braun, Volker, 70176 Stuttgart (DE); Kaminski, Stephen, 73054 Eislingen (DE)
(74) Representative: Wetzel, Emmanuelle

(56) References cited:
- EP-A1- 2 244 404
- WO-A1-2009/020876
- RESEARCH IN MOTION UK LIMITED: "Relay Link HARQ Operation", 3GPP DRAFT; R1-094464(RIM-RELAY LINK HARQ), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050388889, [retrieved on 2009-11-03]
- FUJITSU: "Discussions on HARQ for LTE-A over Un interface", 3GPP DRAFT; R2-094809, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352824, [retrieved on 2009-08-18]

## Description

### Field of the invention

The present invention refers to a method for operating a relay node of a mobile communication network, the relay node being assigned to a base station of a radio cell of said network. Furthermore, the present invention refers to a relay node of a mobile communication network, wherein the relay node is configured so that it can be assigned to a base station of a radio cell of said network.

### State of the art

Cellular radio communication networks having at least one relay node assigned to a base station of a cell of the cellular network are known in the art. When operating such a cellular communication network, the base station may send data to the relay node instead of transmitting the data directly to a terminal residing within the radio cell. The relay node then forwards the data to the terminal. Accordingly, the relay node may receive data from the terminal and forward the received data to the base station. In order to coordinate operations of the base station and the relay node, the base station and the relay node exchange signalling messages.

The 3GPP TSG RAN WG1 Draft R1-094464 "Relay Link HARQ Operation" by Research in Motion UK Limited discloses a method for aggregated HARQ Feedback.

### Summary

An object of the present invention consists in providing a method for operating a relay node, which allows for efficiently transmitting signalling messages from the relay node to the base station without introducing additional constraints to comply with when scheduling transmission resources for transmissions from the relay node to the base station. This object is solved by a method according to claim 1 and a relay node according to claim 13.

According to an embodiment of the present invention, a method for operating a relay node of a mobile communication network is suggested, the relay node being assigned to a base station of a radio cell of said network, the cell comprising uplink transmission resources for communicating from the relay node and/or at least one terminal of said network to the base station, the method comprising determining a transmit time interval during which access to the uplink transmission resources is granted to the relay node, collecting acknowledgements related to protocol data units transmitted by the base station or the terminal, and transmitting a report message including said acknowledgements over the uplink transmission resources to the base station during said transmit time interval.

According to this embodiment, each time when the relay node receives a protocol data unit it may generate an acknowledgement. Instead of transmitting these acknowledgements immediately after they are generated the method collects multiple acknowledgements and builds a report message including these acknowledgements. Moreover, the relay node may collect acknowledgement received from the terminal for including them in the report message. The relay node then transmits the report message including the collected acknowledgments during a transmit time interval, preferably during the next transmit time interval, available for transmitting data from the relay node to the base station. In other words, an aggregated report message comprising multiple acknowledgements may be built and transmitted during the next available transmit time interval. However, in case that before the transmit time interval only one acknowledgement has been generated, the report message may comprise this single acknowledgement only.

Generating one or more acknowledgements related to protocol data units and transmitting report message at a later point in time during the transmit time interval avoids a stringent time relationship between a transmission time of the protocol data unit or an expected transmission time of the acknowledgement and the transmit time interval during which the acknowledgement is transmitted. Therefore, a required transmission time for transmitting the acknowledgement from the relay node to the base station needs not to be considered when scheduling the uplink transmission resources. Consequently, a scheduler for assigning the transmit time interval, typically residing within the base station, needs not to consider additional constraints related to the transmission of the acknowledgements. This leads to a better occupancy of the uplink transmission resources at least in some cases. Moreover, the scheduler can be quite easily implemented.

In many embodiments, the relay node cannot receive data from the terminal and transmit data to the base station simultaneously. For the sake of optimum efficiency of data transmissions between the terminal and the base stations via the relay node, it is desirable to assign a quite large amount of transmission time to uplink transmissions from the terminal to the relay node and to assign a rather small amount of transmission time to transmissions from the relay node to the base station because a radio link between the relay node and the base station typically has a comparatively good quality and high bitrates. When applying a method according to the present invention, assigning transmit time intervals for uplink transmissions from the relay node to the base station merely for the transmission of an acknowledgement can be at least almost avoided. As a consequence, a comparatively large fraction of time can be assigned for uplink transmissions from the terminal to the relay node or directly to the base station.

In an embodiment, the acknowledgement is a positive acknowledgement (ACK) indicating the receipt of the protocol data unit related to the acknowledgement or a negative acknowledgment (NACK) indicating a failure in receiving the protocol data unit related to the acknowledgement. In another embodiment, a given acknowledgement may comprise information about one ore more previous acknowledgments that are collected or transmitted to the base station before the given acknowledgement. This information may comprise a portion, preferably a bit, that indicates that at least one of the previous acknowledgements is a negative acknowledgement or that not all previous acknowledgements are positive acknowledgements.

In an embodiment, the uplink transmission resources comprise an uplink shared channel for transmitting signalling and payload data from multiple relay nodes and/or terminals to the base station, said transmitting comprises transmitting the report message over the uplink shared channel. Because the uplink shared channel is used for payload data transmissions, this channel has a comparatively high capacity. Therefore, the report message can easily be transmitted over the uplink shared channel. Signalling and payload data transmitted by multiple relay nodes and terminals and the report message being statistically multiplexed in the uplink shared channel leads to high degree of utilization of the capacity of the uplink shared channel. In an embodiment, a high priority can be assigned to the report message and a low priority can be assigned to different messages, preferably messages comprising payload data. This prevents the report message from being heavily delayed in case of a high load of the radio cell.

In a further embodiment, transmitting the report message comprises including a time advance value in the acknowledgement, said time advance value indicating a transmission time of the protocol data unit or an expected reception time of the acknowledgement related to that protocol data unit.

According to this embodiment, the transmission resources may be subdivided into multiple consecutive time units of a predetermined fixed length and the time advance value may correspond to a number of time units between the transmission of the report message and expected reception time of the acknowledgement or the transmission time of the protocol data unit. Preferably, the time unit corresponds to the time unit related to a framing structure used by the mobile communication network. For example, the time unit may correspond to a frame or a subframe of said framing structure.

In some embodiments, the transmission of an acknowledgement is expected in a certain time unit after the time unit during which the protocol data unit has been transmitted. Typically, according to a communication protocol used in the network, the transmission of the acknowledgement may be expected a fixed number of time units after the time unit during which the protocol data unit has been transmitted. If the message has been received successfully a positive acknowledgement is generated. If the message has not been successfully received a negative acknowledgement is generated. In most cases, the report message comprising the acknowledgement is transmitted in a time unit after the time unit during which the acknowledgement related to the protocol data unit is expected. The time advance value may indicate a number of time units between the time unit during which the report message is transmitted and the time unit expected for the transmission of the acknowledgement. Thus, the base station can compensate a delay introduced by transmitting the report message some time units after the time unit during which the acknowledgement is expected.

In an embodiment, transmitting the report message comprises including a protocol data unit identifier in the acknowledgement for identifying the protocol data unit related to the acknowledgement.

Preferably, the protocol data unit identifier comprises a terminal identifier for identifying the terminal from which the protocol data unit is originating and/or for which the protocol data unit is destined. This allows for easily handle multiple acknowledgement processes in parallel related to different terminals communicating with the base station via the relay node.

In an embodiment, transmission resources for transmitting the protocol data unit are subdivided with respect to frequency into multiple consecutive resource blocks, the transmission of the protocol data unit occupies a subset of said resource blocks, and the protocol data unit identifier comprises a resource block index, preferably the smallest or largest resource block index, referring to a resource block of the subset of resource blocks used for transmitting the protocol data unit related to the acknowledgement. In many cases, multiple protocol data units, possibly originating from different transmitters (terminals or base station) are transmitted simultaneously, wherein each protocol data unit occupies a specific subset of resource blocks. By including the resource block index in the acknowledgement the protocol data unit related to the acknowledgement can be easily identified.

Furthermore, in an embodiment, transmission resources for transmitting the protocol data unit are subdivided with respect to space into multiple spatial layers and the protocol data unit identifier comprises a layer identifier for identifying the spatial layer occupied the protocol data unit related to the acknowledgement. The base station, the relay node and/or the terminal may comprise multiple antennas introducing multiple radio propagation paths corresponding to the spatial layers. Multiple protocol data units may be transmitted over different spatial layers simultaneously, possibly using the same resource blocks. Including the layer identifier in the acknowledgement allows for identifying the protocol data unit related to the acknowledgement.

Furthermore, according to an embodiment, the protocol data unit identifier comprises a transmission direction identifier indicating whether the protocol data unit related to the acknowledgement is originating from the base station or from the terminal.

In an embodiment, downlink transmission resources for transmission from the base station to the terminal and/or the relay node comprise a control channel and the protocol data unit identifier comprises an identifier of a control channel element of said control channel used for transmitting a scheduling grant message for scheduling the transmission of the protocol data unit related to the acknowledgement. A control channel element corresponds to a portion of the downlink transmission resources applied for transmission of control channel data such as the scheduling grant message. When including the identifier of the control channel element in the acknowledgement then the base station can identify the scheduling grant message for scheduling the transmission of the protocol data unit related to the acknowledgement by analysing the acknowledgement. Then, the scheduling grant message, which comprises the recourse blocks allocated for the transmission of the protocol data unit, can be analysed in order to identify the protocol data unit.

In a further embodiment, said transmission the report message comprises including signalling information in the report message, preferably a measurement report generated by the relay node or received from the terminal and/or a scheduling request received from the terminal.

In an embodiment, transmitting the report message comprises generating an uplink protocol data unit, including the report message in the uplink protocol data unit, including payload data in the protocol data unit if payload data is available for being transmitted to the base station, and transmitting the uplink data unit to the base station.

In an embodiment, frequency division duplex (FDD) is applied, i.e., the uplink transmission resources comprise an uplink carrier and the downlink transmission resources comprise a downlink carrier, wherein the uplink carrier and the downlink carrier have different frequencies. Each carrier may comprise multiple subcarriers, e. g. when using multi carrier modulation.

In a preferred embodiment, the mobile communication network is a Long Term Evolution (LTE) radio access network, the uplink shared channel corresponds to the Physical Uplink Shared Channel (PUSCH) of the Long Term Evolution radio access network and/or the protocol data unit is a MAC layer protocol data unit of the Long Term Evolution radio access network. The MAC layer protocol data unit is often also referred to as "transport block".

According to another embodiment of the present invention, a relay node of a mobile communication network is provided, the relay node being configured so that it can be assigned to a base station of a radio cell of said network, the cell comprising uplink transmission resources for communicating from the relay node and/or at least one terminal of said network to the base station, the relay node being arranged for determining a transmit time interval to in which access to the uplink transmission resources is granted to the relay node, collecting acknowledgements related to protocol data units transmitted by the base station or the terminal, and transmitting a report massage including said acknowledgements over the uplink transmission resources to the base station during said transmit time interval.

In an embodiment, the relay node, preferably control circuitry of the relay node, is arranged for executing a method, embodiments of which are described above.

### Brief description of the figures

Preferred embodiments are shown in the figures and described in detail hereinafter.
- Figure 1: shows a cellular communication network;
- Figure 2: shows the structure of uplink and downlink transmission resources of a radio cell of the cellular communication network;
- Figure 3: shows a time-frequency mapping of a control channel of the radio cell;
- Figure 4: shows a diagram of messages exchanged between a base station and a relay node of the radio cell;
- Figure 5: shows a sequence chart of a method for operating a relay node;
- Figure 6: shows a format of a report message according a first embodiment;
- Figure 7: shows a format of a report message according a second embodiment; and
- Figure 8: shows an uplink protocol data unit including the report message and payload data.

### Description of the embodiments

The following description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

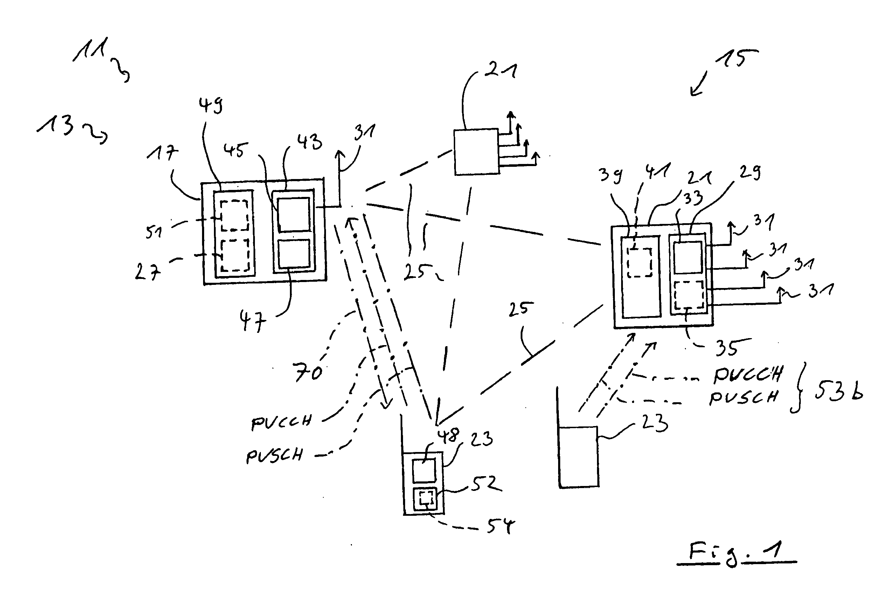

Figure 1 shows a radio access network 11, which is part of a mobile communication system 13. In the shown embodiment, the mobile communication system is the Long Term Evolution (LTE) system specified by the third generation partnership project (3GPP). Accordingly, the radio access network 11 is an LTE access network. However, the present invention is not limited to LTE. It can be applied in connection with different mobile communication systems and/or different radio access network technologies.

A radio cell 15 of the network 11 has a base station 17 - also referred to as eNodeB in LTE. Furthermore, the radio cell 15 has at least one relay node 21 assigned to the base station 17. A mobile terminal 23 - referred to as User Equipment (UE) in LTE - residing within the radio cell 15 can communicate over a radio link 25 directly with the base station 17 and/or indirectly with the base station 17 via the relay node 21. When the terminal 23 and the base station 17 communicate indirectly via the relay node 21 than the relay node 21 forwards data received from the terminal 23 and destined for the base station 17 over radio link 25 to the base station 17. Accordingly, the base station 17 can send data destined for the terminal 23 indirectly via the relay node 21 that forwards the data to the terminal 23.

The relay node 21 is assigned to the base station 17 and therefore part of the radio cell 15 controlled by the base station 17. Thus, the relay node 21 does not define a separate radio cell and therefore has no separate cell identification. Scheduling of radio resources of the radio link 25 is performed by a scheduler 27 of the base station 17.

As shown in Figure 1, the relay node 21 is connected to the base station 17 via the radio link 25. In particular, the relay node 21 is an inband relay node. I. e., radio resources for communication between the base station 17 and the relay node 21 and radio resources for communication between the relay node 21 and a terminal 23 are identical. As the consequence, the relay node 21 cannot receive data from the terminal 23 and forward data to the base station 17 simultaneously. In addition, the relay node 21 cannot receive data from the base station 17 and forward data to the terminal 23 simultaneously. In LTE, an inband relay node that does not define a separate radio cell is also called "type 2 relay node".

The network 11 shown in Figure 1 has two relay nodes 21. However, in different embodiments, the access network 11 may have one or more than two relay nodes. The relay nodes 21 of the shown embodiment have a first transceiver 29 connected to four antennas 31 of the relay node 21 so that the relay node 21 can perform Multiple Input Multiple Output (MIMO) communication. The first transceiver 29 of each relay node 21 has a first transmitter 33 for transmitting a radio signal over the radio link 25 and a first receiver 35 for receiving signals from the radio link 25.

First control circuitry 39 of the relay node 21 is arranged for controlling the first transceiver 29 of the relay node 21 in order to perform data communication with base station 17 and the terminals 23. In an embodiment, the first control circuitry 39 comprises a first processor 41 or microcomputer programmed for controlling the relay node 21 in particular the first transceiver 29.

The base station 17 has a second transceiver 43 comprising a second receiver 45 for receiving signals from the radio link 25 and a second transmitter 47 for transmitting signals to the radio link 25. In the shown embodiment, the base station 17 has only one antenna 31 connected to the second transceiver 43. However, in another embodiment, the base station 17 may have multiple antennas 31 for MIMO communication. In another embodiment, the relay node 21 has a different number of antennas.

The scheduler 27 is part of second control circuitry 49 of the base station 17. The second control circuitry 49 may comprise a second processor 51 or microcomputer programmed for controlling the base station 17, in particular the second transceiver 43. In another embodiment, the scheduler 27 corresponds to and/or is a part of the second processor 51 which is programmed for performing scheduling operations of the scheduler 27.

As shown in Figure 1, each terminal 23 comprises a third transceiver 48 and third control circuitry 52 for controlling the terminal 23, in particular the third transceiver 48. In a preferred embodiment, the control circuitry 52 comprises a third processor 54, which is programmed for controlling the terminal 23.

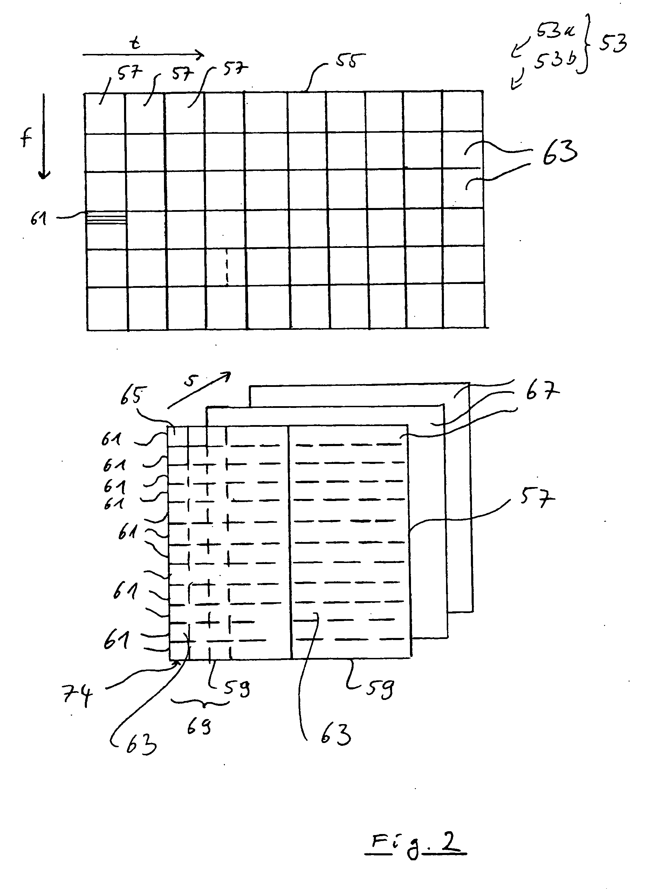

Figure 2 shows how radio resources 53 available for communication over the link 25 are organized. The radio resources 53 are subdivided according to three dimensions: Time t, frequency f and space s. The time is subdivided by consecutive radio frames 55. For the sake of simplicity, Figure 2 shows only one radio frame 55, but when operating the network 11 there are many consecutive radio frames 55, wherein one radio frame 55 follows immediately after another radio frame 55.

As shown in Figure 2, each radio frame 55 is subdivided by 10 subframes 57. Each subframe 57 is subdivided into two slots 59. In the shown embodiment, the duration of a single radio frame 55 is 10 milliseconds. Consequently, each subframe 57 takes 1 ms and each slot 59 takes 0.5 ms. In another embodiment, time is subdivided in a different way. For example, the duration of frames, the number of subframes 57 and/or slots 59 may be different than shown in Figure 2.

Regarding the dimension of frequency f, the radio resources 53 are subdivided into subcarriers 61. Twelve consecutive subcarriers 61 transmitted during a time interval of one slot 59 are referred to as a resource block 63. Furthermore, a resource block 63 is subdivided into resource elements 65, wherein one resource element 65 consumes in the frequency dimension the resources of one subcarrier 61 and in the time dimension a time interval that corresponds to the duration of one modulation symbol 74.

In particular, when performing MIMO communication, i.e. sending and/or receiving using multiple antennas 31, multiple resource elements 65 or resource blocks 63 are transmitted simultaneously using the same subcarrier 61. Therefore, the resource blocks 63 and/or the resource elements 65 transmitted simultaneously using the same subcarrier 61 but different antennas can be considered being assigned to different spatial layers 67. It should be noted that the dimension of space s is optional. If the network is not performing MIMO communication at all then only a single spatial layer 67 is present. In this case, the radio resources 53 are subdivided into time t and frequency f only.

According to the shown embodiment, Frequency Division Duplex (FDD) is applied. That is, the radio resources 53 shown in Figure 2 are provided twice, i. e., in two separate frequency bands or carriers. One of these bands or carriers is dedicated for downlink transmissions and therefore provides downlink transmission resources 53a and the other one is dedicated for uplink transmissions and therefore provides uplink transmission resources 53b. Downlink transmissions are transmissions from the base station 17 to the relay node 21 or the terminal 23 as well as from the relay node 21 to the terminal 23. Uplink transmissions are transmissions from the terminal 23 to the base station 17 or to the relay node 21 as well as transmissions from the relay node 21 to the base station 17. In another embodiment, Time Division Duplex (TDD) is applied, i.e., the radio resources 53 depicted in Figure 2 are provided only once in a single frequency band, wherein some of the subframes 57 are dedicated for downlink transmissions and some other subframes 57 are dedicated for uplink transmissions.

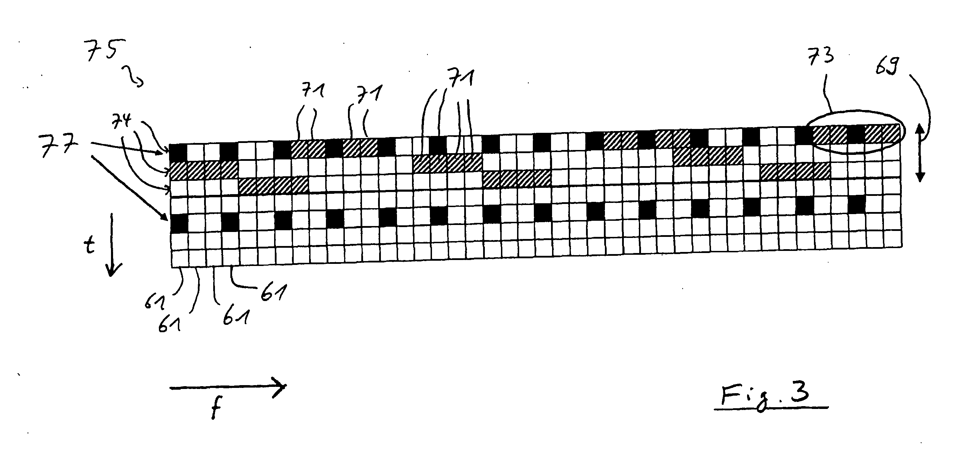

For transmissions over the downlink transmission resources 53a Orthogonal Frequency Division Multiplex (OFDM) is applied and each subframe 57 is subdivided in the time domain into multiple consecutive OFDM symbols 74. A certain number of symbols 74 starting from the beginning of each subframe 57 form a control channel region 69, at least some resource elements 71 of which are assigned to at least one control channel 70 (cf. Figure 1) for transmitting control information between the base station 17, the terminal 23 and/or the relay node 21. In the shown embodiment, the control channel 70 is a Physical Downlink Control Channel (PDCCH) of LTE. According to Figures 2 and 3, the control channel region 69 has three OFDM symbols 74. However, the numbers of symbols 74 of the control channel region 69 can be changed either statically by configuration or semi-statically according to network control and/or management procedures performed during the operation of the radio access network 11, or dynamically for each subframe 57 by means of control signaling. In LTE, control signaling for dynamically changing the number of OFDM symbols 74 of the control channel region 69 is carried out using a separated control channel, i. e. the so-called Physical Control Format Indicator Channel (PCFICH).

Figure 3 shows resource elements 71 assigned to a single control channel 70. The resource elements 65 allocated for a single control channel 70 are referred to as control channel resource elements 71. A group of four control channel resource elements 71 belongs to a resource element group 73 (REG 73). All control channel resource elements 71 residing in the control channel region 69 of a single subframe 57 belong to the same control channel element 75 (CCE 75). In some cases, control channel resource elements 71 of multiple control channel elements 75 preferably of the same subframe 57 may be aggregated to form the control channel 70. Some resource elements 65 of the control channel region 69 are used for transmitting reference symbols 77 by the base station 17. The reference symbols 77 allow for detecting the base station 17 and to perform measurements of a radio link quality and to perform channel estimation. The terminals 23 may send measurement reports to the base station 17 in order to indicate results of the measurements.

For transmissions over the uplink transmission resources 53b Single Carrier Frequency Division Multiple Access (SC-FDMA) is applied. Thus, in the uplink, the modulation symbols 74 are SC-FDMA symbols that may have the same duration as the OFDM symbols in the downlink. As shown in Fig. 1, the uplink transmission resources 53b comprise a Physical Uplink Control Channel PUCCH and a Physical Uplink Shared Channel (PUSCH). The PUCCH is used for uplink signaling (e. g. acknowledgments, scheduling requests, transmissions of channel quality information) only. The PUSCH is used for both signaling and payload data transmissions. Furthermore, the uplink transmission resources 53b may comprise additional channels such as a Physical Random Access Channel (PRACH). The channels are multiplexed in frequency f and time t in order to transmit them over the uplink transmission resources 53b.

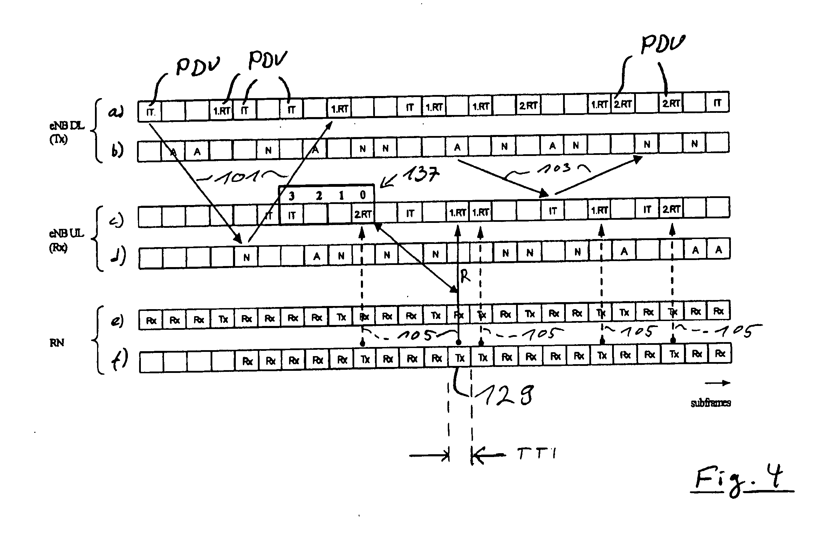

Figure 4 shows an exemplary diagram of a message exchange between the base station 17 and a relay node 21. The messages are depicted as squares, each of them corresponding to a subframe 57.

A first line (a) shown in Figure 4 shows which subframes are allocated for transmissions of downlink scheduling grant messages (downlink resource assignments), signalling messages, and/or payload data messages from the base station 17 to the relay node 21 or the terminal 23. In line (b) subframes 57 are indicated that are allocated for transmitting uplink scheduling grant messages or downlink acknowledgements related to protocol data units transmitted from the relay node 21 of the terminal 23 to the base station 17. Line (c) indicates the subframes 57 that are used for transmissions from the terminal 23 or the relay node 21 over the PUSCH. In line (d) the subframes 57 are depicted that are allocated for transmitting acknowledgements from the terminal 23 to the base station 17 or the relay node 21. Line (e) shows which subframes 57 are used for receiving (Rx) or transmitting (Tx) messages from or to the relay node 21 using downlink transmission resources 53a. Line (f) shows which subframes are used for receiving (Rx) or transmitting (Tx) data over uplink transmission resources 53b from or to the relay node 21.

Arrows 101 show a part of a transmission process for transmitting a protocol data unit from the base station 17 to the terminal 23. The base station 17 transmits an initial transmission IT to the terminal 23. The terminal 23 expects to receive the initial transmission IT a certain number of subframes after the initial transmission IT, in the shown embodiment, four subframes 57 after the initial transmission IT. However, the terminal 23 does not correctly receive the initial transmission IT and therefore sends a negative acknowledgement (NACK, N). The base station 17 expects to receive an acknowledgement (either positive or negative) four subframes 57 after the subframe 57 of the initial transmission IT at the latest. Because the base station 17 has received the negative acknowledgement N it transmits a first retransmission 1.RT. Because the terminal 23 responds to the first retransmission 1.RT with another negative acknowledgement N the base station 17 performs a second retransmission 2.RT. The terminal receives the second retransmission 2.RT correctly and therefore transmits a positive acknowledgement A.

Arrows 103 show a transition from a first transmission process in a uplink direction from the terminal 23 to the base station 17 and a second transmission process in uplink direction from the terminal 23 to the base station 17. The terminal 23 receives a positive acknowledgement A transmitted by the base station 17 and related to the first transmission process. Then, the terminal 23 transmits an initial transmission message IT related to the second transmission process. Because the base station 17 does not receive this initial transmission IT correctly it transmits a negative acknowledgement N back to the terminal 23.

The relay node 21 may generate and collect acknowledgements when it receives protocol data units to be forwarded to the terminal 23. In addition, it may collect acknowledgements it receives from the terminal 23. In order to transmit the acknowledgements to the base station 17 the relay collects the acknowledgements until the beginning of a subframe 57 during which the base station 17 has granted access to the uplink transmission resources 53b, i.e. the uplink carrier. These subframes 57 are marked with arrows 105.

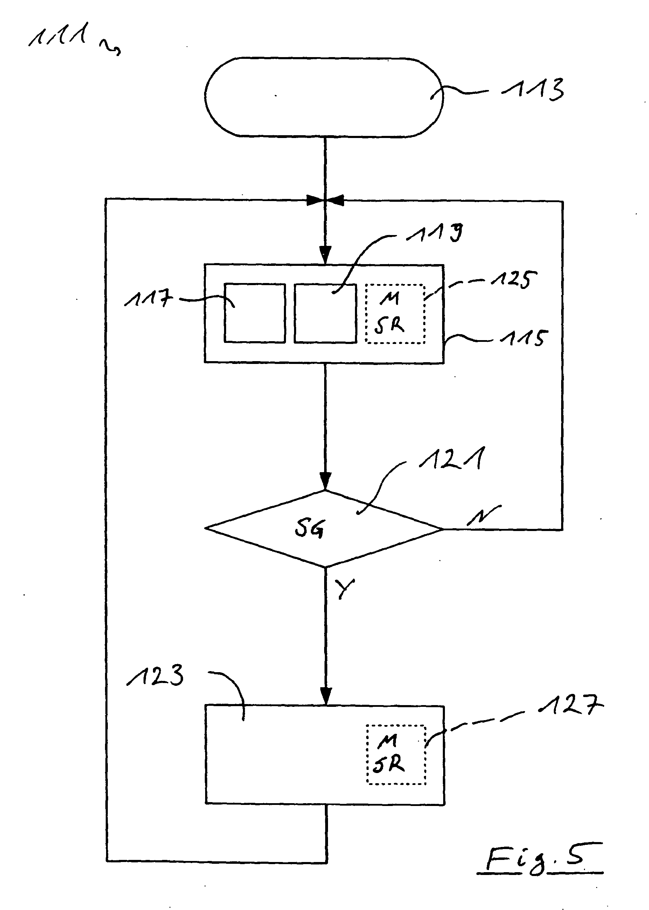

Figure 5 shows a method 111 for operating the relay node 21. A person of skill in the art would readily recognize that steps of the method 111 can be performed by programmed computers. In particular, the first processor 41 of the first control circuitry 39 of the relay node 21 may be programmed for executing the method 111. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, flash memory, magnetic storage media such as a magnetic disks and magnetic tapes, hard drives, or optically readable digital data storage media. The embodiments are also intended to cover computers programmed to perform said steps of the above-described methods.

After a start 113 of the method 111 a step 115 is performed for collecting acknowledgements related to a protocol data unit transmitted by the base station 17 or the terminal 23. The step 115 may comprise the step 117 during which the relay node 21 generates the acknowledgement related to a protocol data unit transmitted by the base station 17 that shall be forwarded to the terminal 23 by the relay node 21. In step 117, the relay node 21 collects an acknowledgement for the terminal 23.

As shown in Figure 4, the protocol data unit (PDU) may correspond to a MAC layer protocol data unit (also referred to as "transport block"). For example, the initial transmissions IT and the retransmissions 1.RX, 2.RT correspond to such protocol data units.

The step 115 may also comprise a step 119 during which the relay node 21 receives an acknowledgement from the terminal 23 and collects the acknowledgement in order to forward it to the base station 17 at a later time.

After step 115 the relay node 21 executes a step 121 during which the relay node 21 verifies whether it may access the uplink transmission resources 53b. To this end, the relay node 21 analyses scheduling grants SG received from the base station 17.

If access to the uplink transmission resources 53b have been granted to the relay node (Y), i.e. a transmit time interval TTI during in which the base station 17 has granted access to the uplink transmission resources 53b corresponds to the current subframe 57 then the relay node 21 transmits a report message including the acknowledgements generated in step 115 (step 123). If access to the uplink transmission resources 53b has not yet been granted (N) then step 121 branches back to step 115 in order to collect further acknowledgements.

After transmitting the report message in step 123 the method 111 returns to step 115.

In an embodiment, the step 115 of the method 111 comprises a step 125 for generating and/or collecting additional signalling information such as a measurement report M describing the radio conditions of a link between the relay node 21 and the terminal 23 and/or the radio conditions of a link between the relay node 21 and the base station 17. The relay node 21 may generate the measurement report M either by controlling the first transceiver 29 to perform measurements or by collecting measurement reports transmitted by the terminal 23. The measurement report M may comprise Channel Quality Information (CQI) reported by a terminal 23 and/or a measurement result generated by the rely node 21 such as a Signal to Interference plus Noise (SINR) value.

Furthermore in step 125, scheduling requests SR transmitted by the terminal 23 may be collected.

Accordingly the step 123 may comprise a sub step 127 during which the relay node 21 includes the signalling information described above, such as the measurement reports M and/or the scheduling requests SR in the report message.

As shown in Figure 4, the relay node 21 transmits the report message during one of the subframes 57 for which the base station 17 has granted access to the uplink transmission resources 53b to the relay node 21.

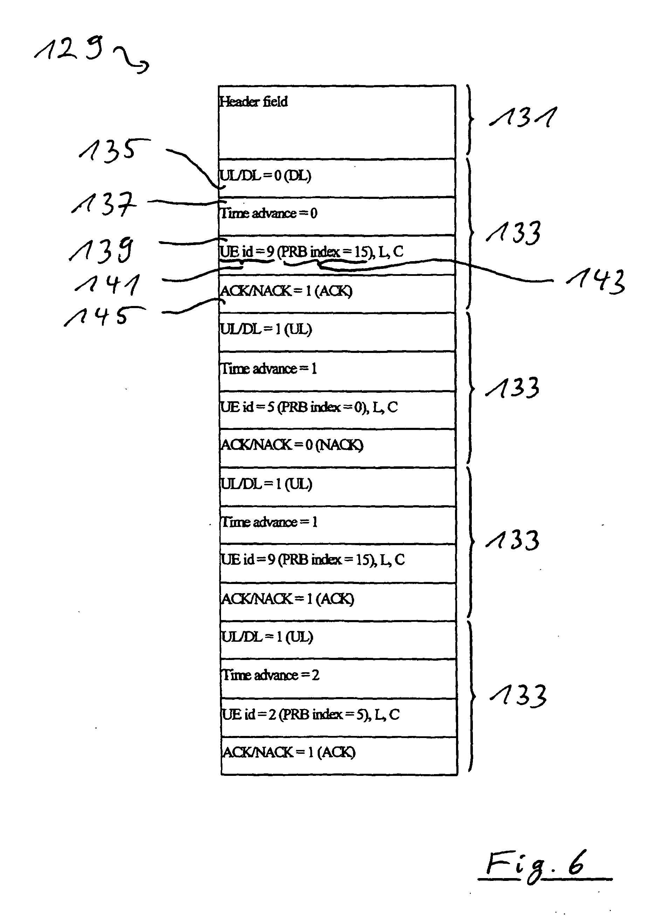

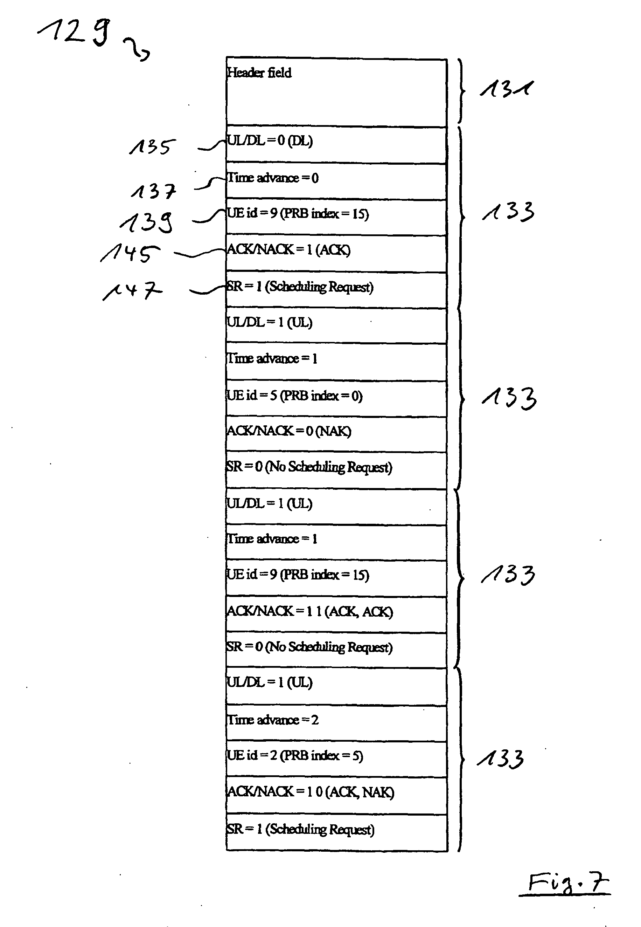

Figure 6 shows a format of the report message 129 according to an embodiment. The report message 129 has a header field 131 that indicates the beginning of the report message 129. The header field 131 is followed by multiple acknowledgements 133. The exemplary report message 129 shown in Figure 7 has four acknowledgements 133. Each acknowledgement 133 has a direction flag 135 to indicate whether the protocol data unit related to the acknowledgement 133 was received from the base station 17 in downlink direction or from the terminal 23 in uplink direction. In the shown embodiment, the flag 135 is encoded as a single bit, wherein a value of zero indicates that the related protocol data unit was received from the base station 17 and a value of one indicates that the related protocol data unit has been received from the terminal. In an embodiment, acknowledgements 133 are reported that are related to a single transmission direction (uplink or downlink) only. In this case, the flag 135 is not required and may be omitted.

The acknowledgement 133 may comprise a time advance value 137. The time advance value 37 indicates an reception time of the acknowledgement 133. In case that the relay node 21 has received the acknowledgement 133 from the terminal 23, the expected reception time of the acknowledgement 133 corresponds to the time when the relay node 21 has received the acknowledgement 133. In case that the relay node 21 has generated the acknowledgement 133 in response to a protocol data unit received from the base station 17 or the terminal 23, the expected reception time corresponds to a time specified by a predefined communication protocol related to this acknowledgement process. In an embodiment, in particular when using LTE, time may be expressed in time units that correspond to the duration of the individual subframes 57. In this embodiment, the expected reception time is a fixed number of subframes 57 after the subframe 57 during which the protocol data unit has been transmitted. For example, in LTE the acknowledgement 133 is expected in the fourth subframe 57 after the subframe during which the protocol data unit has been transmitted (cf. Figure 4).

When transmitting the acknowledgement 133 within the report message 129 the acknowledgement 133 may arrive at the base station 17 later than expected. In the shown embodiment, the time advance value 137 indicates this delay with respect to the expected reception time. In Figure 4, some subframe 57 are labelled with time advance values 137 to be included in the acknowledgement 133 when transmitting the report message 129 in the subframe 57 marked with the arrow R. The report message 129 is transmitted four subframes 57 after the subframe 57 labelled with zero. Therefore, an acknowledgement related to this subframe 57 has the time advanced value 137 of zero. Accordingly, acknowledgements related to earlier subframes (e.g. subframes labelled with 1, 2 or 3) have a time advance value 137 that is grater than zero.

In a further embodiment, multiple transmission processes - so called hybrid ARQ (HARQ) processes - are running simultaneously, each HARQ process being related to transmitting and acknowledging a single protocol data unit. The protocol data unit identifier 139 may comprise an identifier of the HARQ process related to the acknowledgment 133. For instance, in LTE up to eight HARQ processes are running simultaneously on a terminal 23. Consequently, eight different identifiers of the HARQ processes are required. An identifier of a HARQ process may comprise an integer value, preferably in the range from 0 to 7.

Furthermore, the acknowledgement 133, comprises a protocol data unit identifier 139 for identifying the protocol data unit relating to the acknowledgement 133. The protocol data unit identifier 139 may comprise a terminal identifier (user equipment id, UE id) 141, a resource block index 143, a layer identifier L, and/or a control channel element identifier C.

The terminal identifier 141 may comprise or correspond to a code already assigned to the terminal 23 by some control or management protocol already running in the radio cell 15. For example, in LTE, the terminal identifier 141 may comprise or correspond to a Cell Radio Network Temporary Identifier (C-RNTI). Alternatively, the base station 17 and the relay node 21 may negotiate a special terminal identifier (compressed terminal identifier) that has a smaller size than the C-RNTI in order to keep a message size of the acknowledgement 133 small.

The resource block identifier 143 may comprise an index of a resource block 63 allocated for transmitting the related protocol data unit. Typically multiple resource blocks 63 are allocated for transmitting the protocol data unit. In this case, the resource block identifier 143 may comprise the smallest or largest index of a resource block 63 allocated for the transmission of the protocol data unit.

The control channel identifier C may comprise an index of a control channel element 75 used for transmission of a scheduling grant for the protocol data unit related to the acknowledgement 133. In case that multiple control channel elements 71 are used for transmission of the scheduling grant then the control channel element identifier C may comprise or correspond to the smallest or the largest index of the control channel element 71 used for transmission of the scheduling grant.

In particular, when using MIMO, the protocol data unit identifier 139 may comprise an identifier L of the spatial layer 67 used for transmitting the protocol data unit related to the acknowledgement 133. Because a transmission performed over a certain spatial layer 67 is typically scrambled with a code specific to that spatial layer 67 the layer identifier L also corresponds to a codeword identifier identifying said code word.

Moreover, the acknowledgement 133 comprises an ACK/NACK bit 145 to indicate whether the acknowledgement 133 is a positive acknowledgement (ACK) or a negative acknowledgement (NACK). In the shown embodiment, a value of one of this ACK/NACK bit 145 indicates a positive acknowledgement.

In an embodiment, the acknowledgment 133 comprises a 2-bit field that is used to indicate whether the acknowledgment 133 is a positive acknowledgment (ACK), a negative acknowledgment (NACK), or a discontinuous transmission (DTX) indication. The DTX indication indicates a signaling error (e.g. uplink scheduling grant received by the relay node 21, but not received by terminal 23, so the terminal did not send an uplink protocol data unit and the relay node 21 does not receive this uplink protocol data unit).

In another embodiment, at least a part of the acknowledgements are related to scheduling grant messages for the relay node 21 or the terminal 23 sent by the base station 17 to the relay node 21. The relay node 21 may generate and collect an acknowledgement related to a scheduling grant message received from the base station 17. The acknowledgments may be related to a scheduling grant message that indicates to the relay node 21 when and/or how to forward data received from the base station to the terminal 23. After having received such an acknowledgment the base station knows when and/or how the relay node 21 will forward the data and can schedule appropriate downlink resources for the transmission of the data form the relay node 21 to the terminal 23.

In an embodiment, the acknowledgement 133 comprises multiple ACK/NACK bits 145, each ACK/NACK bit 145 being related to one spatial layer 67. In this embodiment, the layer identifier L may be omitted.

In another embodiment, as shown in Figure 7, the acknowledgement 133 comprises a scheduling request field 147. For indicating that a terminal 23, preferably the terminal 23 from which the protocol data unit identified by the protocol data unit identifier 139, has sent a scheduling request SR. In the shown embodiment, the scheduling request field 147 comprises a single bit in order to indicate this scheduling request.

When operating the access network 11, the terminal 23 may send a scheduling request SR at any time when the terminal 23 is allowed to access transmission resources for sending the scheduling request. The relay node 21 may receive the scheduling request transmitted by the terminal 23, even if the base station 17 does not receive the scheduling request, for example due to transmission errors. Because forwarding the scheduling request SR to the base station 17 is not time critical the relay node 21 may store the scheduling request and include it in the report message 129 and send the report message 129 during the next transmit time interval TTI available for transmitting the report message 129 to the base station 17. Forwarding the scheduling request to the base station 17 via the relay node 21 allows for informing the base station 17 about the scheduling request SR rather quickly. Without this forwarding the terminal 23 would have to wait for some time for a scheduling grant corresponding to the scheduling request and retransmit the scheduling request SR if the terminal 23 does not receive the scheduling grant within that time.

Furthermore, in an embodiment, the acknowledgement 133 may be used to report a scheduling request SR to the base station 17 without acknowledging any protocol data unit. In this case, the ACK/NACK bit 145 may have a predefined value, preferably a value corresponding to a negative acknowledgement, or may be omitted. When receiving the acknowledgement 133, the base station 17 knows whether there is a pending protocol data unit to be acknowledged or not. If there is no pending protocol data unit then the base station 17 ignores the ACK/NACK bit of the acknowledgement 133.

When always including the ACK/NACK bit 145, failures in decoding the report message 129 can be avoided if the relay node 21 transmits an acknowledgement 133 comprising the ACK/NACK bit 145 although the base station 17 expects an acknowledgement 133 without the ACK/NACK bit 145 and vice versa. If the relay node 21 sets the ACK/NACK bit 145 of a value corresponding to a negative acknowledgement then an unintended acknowledgements of protocol data units can be avoided if the base station 17 has protocol data units being pending to be acknowledged but the relay node 21 does not know about these pending protocol data units.

In embodiments using the 2-bit field for encoding different types (ACK, NACK, DTX) of the acknowledgement 133, a fourth code of the 2-bit field may be used to indicate that no acknowledgment shall be performed but only a scheduling request SR shall be forwarded.

At least some parameters described above may be specified implicitly within the report message instead of reserving fields within the report message 129. For example, the order of the acknowledgments 133 may indicate whether the related protocol data unit was received in uplink or in downlink direction. In this case, the direction flag may 135 be omitted. A defined number of acknowledgments 133 following the header field 131 may be related to protocol data units received in uplink direction; the remaining acknowledgments 133 may be related to downlink protocol data units, or vice versa. Said defined number of acknowledgments may be defined in the header field 131.

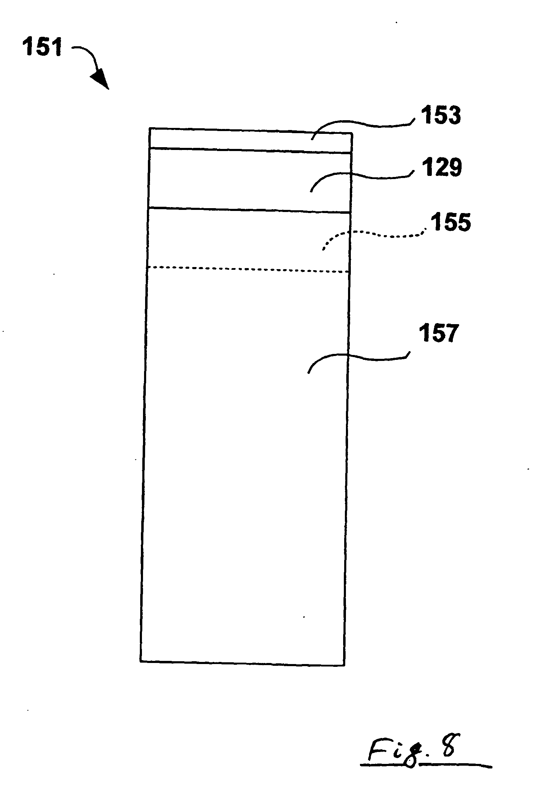

As shown in Figure 8, the report message 129 may be included in an uplink protocol data unit 151. Besides the report message 129, the uplink protocol data unit 151 comprises a header 153 and payload data 157. In an embodiment, the uplink protocol data unit 151 may comprise a measurement report field 155 containing at least one measurement report. In another embodiment, the at least one measurement report is included in the report message 129. The relay node 21 may generate and transmit the uplink protocol data unit 151 comprising the payload data 157 if payload data is available within the relay node 21 to be transmitted to the base station 17. Otherwise the relay node 21 may generate and transmit an uplink protocol data unit 151 without the payload data 157.

In case of multiplexing of the report message 129 with payload data 157 and/or the measurement report 155, the uplink protocol data unit 151 may be organized to minimize the parameter overhead, e.g. a single terminal identifier 141 may be included to indicate that report message 129, payload data and/or the measurement report relate to the terminal 23 identified by the terminal identifier 141.

In another embodiment, special radio resources, preferably a part of at least some subframes 57, are allocated for transmitting the report message 129. An additional physical channel for transmitting the report message 129 may be provided, wherein said special radio resources are assigned to this physical channel.

To sum up, the embodiments of the present invention, allow for collecting acknowledgements and signalling information either received from terminals 23 or generated by the relay node 21 and transmitting a report message 129 comprising the acknowledgements and/or signalling information in the next time unit, i.e. subframe 57 available for uplink transmissions from the relay node 21 to the base station 17 over the PUSCH. Sending the report message 129 instead of individual messages improves the performance of the network 11.

## Claims

1. Method (111) for operating a relay node (21) of a mobile communication network (11), the relay node (21) being assigned to a base station (17) of a radio cell (15) of said network (11), the cell (15) comprising uplink transmission resources (53b) for communicating from the relay node (21) and/or at least one terminal (23) of said network (11) to the base station (17), the method (111) comprising
- determining (121) a transmit time interval (TTI) during which access to the uplink transmission resources (53b) is granted to the relay node (21),
wherein the method (111) further comprises
- collecting (115) acknowledgements (133) related to a protocol data unit transmitted by the base station (17) or the terminal (23) and
- transmitting (123) a report message (129) including said collected acknowledgements (133) over the uplink transmission resources (53b) to the base station (17) during said transmit time interval (TTI),
**characterized in that** transmitting (123) the report message (129) comprises including a time advance value (137) in the acknowledgement (133), said time advance value (137) indicating a transmission time of the protocol data unit or an expected reception time of the acknowledgement (133) related to that protocol data unit.

2. Method (111) according to claim 1, wherein the uplink transmission resources (53b) comprise an uplink shared channel (PUSCH) for transmitting signaling and payload data from multiple relay nodes (21) and/or terminals (23) to the base station (17), said transmitting comprises transmitting the report message (129) over the uplink shared channel (PUSCH).

3. Method (111) according to claim 1 or 2, wherein the transmission resources are subdivided into multiple consecutive time units (57) of a predetermined fixed length and wherein the time advance value (137) corresponds to a number of time units (57) between the transmission of the report message (129) and the expected reception time of the acknowledgement (133) or the transmission time of the protocol data unit.

4. Method (111) according to one of the precedent claims, wherein transmitting (123) the report message (129) comprises including a protocol data unit identifier (139) in the acknowledgement (133) for identifying the protocol data unit related to the acknowledgement (133).

5. Method (111) according to claim 4, wherein the protocol data unit identifier (139) comprises a terminal identifier (141) for identifying the terminal (23) from which the protocol data unit is originating and/or for which the protocol data unit is destined.

6. Method (111) according to claim 4 or 5, wherein transmission resources for transmitting the protocol data unit are subdivided with respect to frequency (f) into multiple consecutive resource blocks (63), the transmission of the protocol data unit occupies a subset of said resource blocks (63), and wherein the protocol data unit identifier (139) comprises a resource block index (143), preferably the smallest or largest resource block index (143), referring to a resource block (63) of the subset of resource blocks used for transmitting the protocol data unit related to the acknowledgement (133).

7. Method (111) according to one of claims 4 to 6, wherein transmission resources for transmitting the protocol data unit are subdivided with respect to space (s) into multiple spatial layers (67) and wherein the protocol data unit identifier (139) comprises a layer identifier (L) for identifying the spatial layer (67) occupied by the protocol data unit related to the acknowledgement (133).

8. Method (111) according to one of claims 4 to 7, wherein the protocol data unit identifier (139) comprises a transmission direction identifier (135) indicating whether the protocol data unit related to the acknowledgement (133) is originating from the base station (17) or from the terminal (23).

9. Method (111) according to one of claims 4 to 8, wherein downlink transmission resources for transmission from the base station (17) to the terminal (23) and/or the relay node (21) comprise a control channel and wherein the protocol data unit identifier comprises an identifier (C) of a control channel element (71) of said control channel used for transmitting a scheduling grant message for scheduling the transmission of the protocol data unit related to the acknowledgement (133).

10. Method (111) according to one of the precedent claims, wherein said transmitting (123) the report message comprises including (127) signaling information in the report message (129), preferably a measurement report (M) generated by the relay node (21) or received from the terminal (23) and/or a scheduling request (SR) received form the terminal (23).

11. Method (111) according to one of the precedent claims, wherein transmitting (123) the report message (129) comprises generating an uplink protocol data unit (151), including the report message (129) in the uplink protocol data unit (151), including payload data (157) in the protocol data unit if payload data is available for being transmitted to the base station (17), and transmitting the uplink data unit (151) to the base station (17).

12. Method (111) according to one of the precedent claims, wherein the mobile communication network is a Long Term Evolution radio access network (11), the uplink shared channel corresponds to the Physical Uplink Shared Channel of the Long Term Evolution radio access network and/or the protocol data unit is a MAC layer protocol data unit of the Long Term Evolution radio access network.

13. Relay node (21) of a mobile communication network (11), the relay node (21) being assignable to a base station (17) of a radio cell (15) of said network (11), the cell (15) comprising uplink transmission resources for communicating from the relay node (21) and/or at least one terminal (23) of said network (11) to the base station (17), the relay node (21) being arranged for
- determining (121) a transmit time interval (TTI) during which access to the uplink transmission resources is granted to the relay node (21),
wherein the relay node (21) is further arranged for
- collecting (115) acknowledgements (133) related to protocol data units transmitted by the base station (17) or the terminal (23) and
- transmitting (123) a report message (129) including said acknowledgements (133) over the uplink transmission resources (53b) to the base station (17) during said transmit time interval (TTI).
**characterized in that** transmitting (123) the report message (129) comprises including a time advance value (137) in the acknowledgement (133), said time advance value (137) indicating a transmission time of the protocol data unit or an expected reception time of the acknowledgement (133) related to that protocol data unit.

14. Relay (21) node according to claim 13, wherein the relay node (21), preferably control circuitry (39) of the relay node (21), is arranged for executing a method (111) according to one of claims 1 to 12.

## Patentansprüche

1. Verfahren (111) zum Betrieb eines Relaisknotens (21) eines mobilen Kommunikationsnetzwerks (11), wobei der Relaisknoten (21) einer Basisstation (17) einer Funkzelle (15) des besagten Netzwerks (11) zugeordnet ist, wobei die Zelle (15) Uplink-Übertragungsressourcen (53b) für die Verbindung von dem Relais-Knoten (21) und/oder mindestens einem Endgerät (23) des besagten Netzwerks (11) zu der Basisstation (17) umfasst, wobei das Verfahren (111) umfasst:
- Bestimmen (121) eines Übertragungszeitintervalls (TTI), während welchem dem Relaisknoten (21) Zugang zu den Uplink-Übertragungsressourcen (53b) gewährt wird,
wobei das Verfahren (111) welterhin umfasst:
- Erfassen (115) von Bestätigungen (133) in Bezug auf eine von der Basisstation (17) oder dem Endgerät (23) übertragene Protokolldateneinheit, und
- Übertragen (123) einer Berichtsmeldung (129), welche die besagten erfassten Bestätigungen (133) enthält, über die Uplink-Übertragungsressourcen (53b) an die Basisstation (17) während des besagten Übertragungszeltintervalls (TTI),
**dadurch gekennzeichnet, dass** das Übertragen (123) der Berichtsmeldung (129) das Einfügen eines Zeitvorlaufswerts (137) in die Bestätigung (133) umfasst, wobei der besagte Zeltvorlaufswert (137) eine Übertragungszeit der Protokolldateneinheit oder eine erwartete Empfangszeit der diese Protokolldateneinheit betreffenden Bestätigung (133) angibt.

2. Verfahren (111) nach Anspruch 1, wobei die Uplink-Übertragungsressourcen (53) einen gemeinsamen Upllnk-Kanal (PUSCH) für die Übertragung von Signalisierungs- und Nutzdaten von mehreren Relaisknoten (21) und/oder Endgeräten (23) an die Basisstation (17) umfassen, wobei das besagte Übertragen das Übertragen der Berichtsmeldung (129) über den gemeinsamen Uplink-Kanal (PUSCH) umfasst.

3. Verfahren (111) nach Anspruch 1 oder 2, wobei die Übertragungsressourcen In mehrere aufeinanderfolgende Zeiteinheiten (57) einer vorbestimmten festgelegten Länge aufgetellt sind, und wobei der Zeitvorlaufswert (137) einer Anzahl von Zeiteinheiten (57) zwischen der Übertragung der Berichtsmeldung (129) und der erwarteten Empfangszeit der Bestätigung (133) oder der Übertragungszeit der Protokolldateneinheit entspricht.

4. Verfahren (111) nach einem der vorstehenden Ansprüche, wobei das Übertragen (123) der Berichtsmeldung (129) das Einfügen einer Protokolldateneinheitskennung (139) in die Bestätigung (133) umfasst, um die Bestätigung (133) betreffende Protokolldateneinheit zu identifizieren.

5. Verfahren (111) nach Anspruch 4, wobei die Protokolldatenelnheitskennung (139) eine Endgerätkennung (141) zur Identifizierung des Endgeräts (23), von welchem die Protokolldateneinheit stammt und/oder für welche die Protokolldateneinheit bestimmt Ist, umfasst.

6. Verfahren (111) nach Anspruch 4 oder 5, wobei die Übertragungsressourcen für die Übertragung der Protokolldateneinheit in Bezug auf die Frequenz (f) in mehrere aufeinanderfolgende Ressourcenblöcke (63) aufgstellt werden, wobei die Übertragung der Protokolldateneinheit eine Tellmenge der besagten Ressourcenblöcke (63) belegt, und wobei die Protokolldateneinheitskennung (139) einen Ressourcenblock-Index (143), vorzugsweise den kleinsten oder größten Ressourcenblock-Index (143), welcher sich auf einen Ressourcenblock (63) der Teilmenge der für die Übertragung der die Bestätigung (133) betreffenden Protokolldatenelnhelt benutzten Ressourcenblöcke bezieht, umfasst.

7. Verfahren (111) nach einem der Ansprüche 4 bis 6, wobei die Übertragungsressourcen für die Übertragung der Protokolldateneinheit In Bezug auf Raum (s) in mehrere räumliche Schichten (67) aufgeteilt werden, und wobei die Protokolldateneinheitskennung (139) eine Schichtkennung (L) zur Identifizierung der von der mit der Bestätlgung (133) assoziierten Protokolldateneinheit belegten räumlichen Schicht (67) umfasst.

8. Verfahren (111) nach einem der Ansprüche 4 bis 7, wobei die Protokolldateneinheitskennung (139) eine Übertragungsrichtungskennung (135) umfasst, welche angibt, ob die mit der Bestätigung (133) assoziierten Daten von der Basisstation (17) oder von dem Endgerät (23) stammen.

9. Verfahren (111) nach einem der Ansprüche 4 bis 8, wobei die Downlink-Übertragungsressourcen für die Übertragung von der Basisstation (17) an das Endgerät (23) und/oder den Relaisknoten (21) einen Steuerkanal umfassen, und wobei die Protokolldateneinheitskennung eine Kennung (C) eines Steuerkanalelements (71) des besagten für die Übertragung einer Planungsgenehmigungsnachricht zum Planen der Übertragung der mit der Bestätlgung (133) assoziierten Protokolldateneinheit benutzten Steuerkanals umfasst.

10. Verfahren (111) nach einem der vorstehenden Ansprüche, wobei das besagte Übertragen (123) der Berichtsmeldung das Elnfügen (127) der Signalisierungsinformationen In die Berichtsmeldung (129), vorzugsweise In einen von dem Relaisknoten (21) erzeugten oder von dem Endgerät (23) empfangenen Messbericht (M) oder eine von dem Endgerät (23) empfangene Planungsanforderung (SR), umfasst.

11. Verfahren (111) nach einem der vorstehenden Ansprüche, wobei das Übertragen (123) der Berichtsmeldung (129) das Erzeugen einer Uplink-Protokolldateneinhelt (151), das Einfügen der Berichtsmeldung (129) in die Uplink-Protokolldateneinhelt (151), das Einfügen der Nutzdaten (157) in die Protokolldateneinheit, wenn Nutzdaten für die Übertragung an die Basisstation (17) verfügbar sind, und das Übertragen der Uplink-Dateneinhelt (151) an die Basisstation (17) umfasst.

12. Verfahren (111) nach einem der vorstehenden Ansprüche, wobei das mobile Kommunikationsnetzwerk ein Long Term Evolution-Funkzugangsnetzwerk (11) ist, der gemeinsame Upllnk-Kanal dem physischen gemeinsamen Uplink-Kanal des Long Term Evotution-Funkzugangsnetzwerks entspricht, und/oder die Protokolldateneinheit eine MAC-Schicht-Protokolldateneinheit des Long Term Evolution-Funkzugangsnetzwerks Ist.

13. Relaisknoten (21) eines mobilen Kommunikationsnetzwerks (11), wobei der Relaisknoten (21) einer Basisstation (17) einer Funkzelle (15) des besagten Netzwerks (11) zugeordnet werden kann, wobei die Zelle (15) Uplink-Übertragungsressourcen für die Verbindung von dem Relais-Knoten (21) und/oder mindestens einem Endgerät (23) des besagten Netzwerks (11) zu der Basisstation (17) umfasst, wobei der Relalsknoten (21) für das Durchführen des folgenden Schritts ausgelegt ist:
- Bestimmen (121) eines Übertragungszeitintervalls (TTI), während welchem dem Relaisknoten (21) Zugang zu den Uplink-Übertragungsressourcen gewährt wird,
wobei der Relaisknoten (21) weiterhin für das Durchführen der folgenden Schritte ausgelegt ist:
- Erfassen (115) von Bestätigungen (133) In Bezug auf eine von der Basisstation (17) oder dem Endgerät (23) übertragene Protokolldateneinheit, und
- Übertragen (123) einer Berichtsmeldung (129), welche die besagten erfassten Bestätigungen (133) enthält, über die Uplink-Übertragungsressourcen (53b) an die Basisstation (17) während des besagten Übertragungszeitintervalls (TTI),
dadurch gekennzelchnet, dass das Übertragen (123) der Berichtsmeldung (129) das Einfügen eines Zeitvorlaufswerts (137) In die Bestätigung (133) umfasst, wobei der besagte Zeitvorlaufswerts (137) eine Übertragungszelt der Protokolldateneinheit oder eine erwartete Empfangszeit der diese Protokolldateneinheit betreffenden Bestätigung (133) angibt.

14. Relaisknoten (21) nach Anspruch 13, wobei der Relaisknoten, vorzugsweise eine Steuerschaltungsanordnung (39) des Relaisknotens (21), für das Durchführen eines Verfahrens (111) gemäß einem der Ansprüche 1 bis 12 ausgelegt ist.

## Revendications

1. Procédé (111) de fonctionnement d'un noeud relais (21) d'un réseau de communication mobile (11), le noeud relais (21) étant attribué à une station de base (17) d'une cellule radio (15) dudit réseau (11), la cellule (15) comprenant des ressources de transmission de liaison montante (53b) pour communiquer entre le noeud relais (21) et/ou au moins un terminal (23) dudit réseau (11) et la station de base (17), le procédé (111) comprenant l'étape suivante
- déterminer (121) un intervalle de temps de transmission (TTI) durant lequel l'accès aux ressources de transmission de liaison montante (53b) est accordé au noeud relais (21),
le procédé (111) comprenant en outre les étapes suivantes
- collecter (115) des accusés de réception (133) associés à une unité de données de protocole transmis par la station de base (17) ou le terminal (23) et
- transmettre (123) un message de rapport (129) comprenant lesdits accusés de réception (133) collectés sur les ressources de transmission de liaison montante (53b) à la station de base (17) durant ledit intervalle de temps de transmission (TTI),
**caractérisé en ce que** la transmission (123) du message de rapport (129) consiste à Inclure une valeur d'avance temporelle (137) dans l'accusé de réception (133), ladite valeur d'avance temporelle (137) indiquant un instant de transmission de l'unité de données de protocole ou un instant de réception prévu de l'accusé de réception (133) associé à cette unité de données de protocole.

2. Procédé (111) selon la revendication 1, dans lequel les ressources de transmission de liaison montante (53b) comprennent un canal partagé de liaison montante (PUSCH) pour transmettre des données de signalisation et de charge utile entre plusieurs noeuds relais (21) et/ou terminaux (23) et la station de base (17), ladite transmission comprenant la transmission du message de rapport (129) sur le canal partagé de liaison montante (PUSCH).

3. Procédé (111) selon la revendication 1 ou 2, dans lequel les ressources de transmission sont subdivisées en plusieurs unités de temps (57) consécutives d'une longueur fixe prédéterminée et dans lequel la valeur d'avance temporelle (137) correspond à un nombre d'unités de temps (57) entre la transmission du message de rapport (129) et l'instant de réception prévu de l'accusé de réception (133) ou l'instant de transmission de l'unité de données de protocole.

4. Procédé (111) selon l'une des revendications précédentes, dans lequel la transmission (123) du message de rapport (129) consiste à Inclure un identifiant de l'unité de données de protocole (139) dans l'accusé de réception (133) pour identifier l'unité de données de protocole associée à l'accusé de réception (133).

5. Procédé (111) selon la revendication 4, dans lequel l'identifiant de l'unité de données de protocole (139) comprend un identifiant de terminal (141) pour identifier le terminal (23) d'où l'unité de données de protocole provient et/ou auquel l'unité de données de protocole est destinée.

6. Procédé (111) selon la revendication 4 ou 5, dans lequel des ressources de transmission pour transmettre l'unité de données de protocole sont subdivisées en fonction de la fréquence (f) en plusieurs blocs de ressources (63) consécutifs, la transmission de l'unité de données de protocole occupant un sous-ensemble desdits blocs de ressources (63), et dans lequel l'identifiant de l'unité de données de protocole (139) comprend un index de bloc de ressource (143), de préférence l'index de bloc de ressource le plus petit ou le plus grand (143), se rapportant à un bloc de ressource (63) du sous-ensemble de blocs de ressource utilisé pour transmettre l'unité de données de protocole associée à l'accusé de réception (133).

7. Procédé (111) selon l'une des revendications 4 à 6, dans lequel des ressources de transmission pour transmettre l'unité de données de protocole sont subdivisées en fonction d'un ou de plusieurs espaces en plusieurs couches spatiales (67) et dans lequel l'identifiant de l'unité de données de protocole (139) comprend un identifiant de couche (L) pour identifier la couche spatiale (67) occupée par l'unité de données de protocole associée à l'accusé de réception (133),

8. Procédé (111) selon l'une des revendications 4 à 7, dans lequel l'identifiant de l'unité de données de protocole (139) comprend un identifiant de la direction de transmission (135) indiquant si l'unité de données de protocole associée à l'accusé de réception (133) provient de la station de base (17) ou du terminal (23).

9. Procédé (111) selon l'une des revendications 4 à 8, dans lequel des ressources de transmission de liaison descendante pour la transmission entre la station de base (17) et le terminal (23) et/ou le noeud relais (21) comprennent un canal de commande et dans lequel l'Identifiant de l'unité de données de protocole comprend un identifiant (C) d'un élément de canal de commande (71) dudit canal de commande utilisé pour transmettre un message d'autorisation de planification pour planifier la transmission de l'unité de données de protocole associée à l'accusé de réception (133).

10. Procédé (111) selon l'une des revendications précédentes, dans lequel ladite transmission (123) du message de rapport consiste à Inclure (127) des informations de signalisation dans le message de rapport (129), de préférence un rapport de mesure (M) généré par le noeud relais (21) ou provenant du terminal (23) et/ou une demande de planification (SR) provenant du terminal (23).

11. Procédé (111) selon l'une des revendications précédentes, dans lequel la transmission (123) du message de rapport (129) comprend la génération d'une unité de données de protocole de liaison montante (151), contenant le message de rapport (129) dans l'unité de données de protocole de liaison montante (151), contenant des données de charge utile (157) dans l'unité de données de protocole si des données de charge utile peuvent être transmises à la station de base (17), et la transmission de l'unité de données de liaison montante (151) à la station de base (17).

12. Procédé (111) selon l'une des revendications précédentes, dans lequel le réseau de communication mobile est un réseau d'accès radio d'évolution à long terme (11), le canal partagé de liaison montante correspond au canal partagé de liaison montante physique du réseau d'accès radio d'évolution à long terme et/ou l'unité de données de protocole est une unité de données de protocole de couche MAC du réseau d'accès radio d'évolution à long terme.

13. Noeud relais (21) d'un réseau de communication mobile (11), le noeud relais (21) pouvant être attribué à une station de base (17) d'une cellule radio (15) dudit réseau (11), la cellule (15) comprenant des ressources de transmission de liaison montante pour communiquer entre le noeud relais (21) et/ou au moins un terminal (23) dudit réseau (11) et la station de base (17), le noeud relais (21) étant conçu pour
- déterminer (121) un intervalle de temps de transmission (TTI) durant lequel l'accès aux ressources de transmission de liaison montante est accordé au noeud relais (21),
dans lequel le noeud relais (21) est en outre conçu pour
- collecter (115) des accusés de réception (133) associés à des unités de données de protocole transmis par la station de base (17) ou le terminal (23) et
- transmettre (123) un message de rapport (129) comprenant lesdits accusés de réception (133) sur les ressources de transmission de liaison montante (53b) à la station de base (17) durant ledit intervalle de temps de transmission (TTI),
**caractérisé en ce que** la transmission (123) du message de rapport (129) consiste à Inclure une valeur d'avance temporelle (137) dans l'accusé de réception (133), ladite valeur d'avance temporelle (137) indiquant un instant de transmission de l'unité de données de protocole ou un instant de réception prévu de l'accusé de réception (133) associé à cette unité de données de protocole.

14. Noeud relais (21) selon la revendication 13, dans lequel le noeud relais (21), de préférence un circuit de commande (39) du noeud relais (21), est conçu pour exécuter un procédé (111) selon l'une des revendidations 1 à 12.
